# EUROPEAN PATENT APPLICATION

(11) **EP 1 130 923 A2**
(43) Date of publication of application: **05.09.2001**
(21) Application number: 01301639.9
(22) Date of filing: 23.02.2001
(51) Int. Cl.: H04N 7/24

(54) **Contents transmission system and contents processing apparatus**

(30) Priority: 29.02.2000 JP 2000054947
(71) Applicant: KABUSHIKI KAISHA TOSHIBA, Kawasaki-shi, Kanagawa-ken 210-8572 (JP)
(72) Inventor: Kikuchi, Yoshihiro, c/o Intellectual Prop. Div., Minato-ku, Tokyo 105-8001 (JP); Masuda, Tadaaki, c/o Intellectual Prop. Div., Minato-ku, Tokyo 105-8001 (JP); Chujoh, Takeshi, c/o Intellectual Prop. Div., Minato-ku, Tokyo 105-8001 (JP); Nagai, Takeshi, c/o Intellectual Prop. Div., Minato-ku, Tokyo 105-8001 (JP); Watanabe, Toshiaki, c/o Intellectual Prop. Div., Minato-ku, Tokyo 105-8001 (JP); Yamaguchi, Noboru, c/o Intellectual Prop. Div., Minato-ku, Tokyo 105-8001 (JP); Furukawa, Reiko, c/o Intellectual Prop. Div., Minato-ku, Tokyo 105-8001 (JP)
(74) Representative: Midgley, Jonathan Lee

(57) **Abstract**

A contents transmission system comprising a first terminal (100) which receives a first code stream produced by compression-encoding contents and has a converter section (102) converting the first code stream into a second code stream having a data size smaller than that of the first code stream, a transmission section (103) which transmits the second code stream, and a second terminal which receives the second code stream transmitted from the first terminal and has a reconstruction section reconstructing the contents by decoding the second code stream.

## Description

The present invention relates to a contents transmission system and a contents processing apparatus used in the contents transmission system that transmits contents such as video and speech signals in the form of compression-encoded code streams via networks, receives them with devices such as handyphones, portable information terminals and personal computers, decodes, reconstructs and modifies them.

In recent years, contents transmission systems have been investigated that compression-encode multimedia contents such as image and speech signals into information of smaller data size, transmit those code streams via wireless networks using PHS and IMT-2000, receive, decode and reconstruct them with portable terminals such as handyphones and portable information terminals. As a compression-encoding scheme for video data, an international standard, for example MPEG-4, standardized by ISO/IEC, is used. MPEG-4 is explained in documents such as "All of MPEG-4" edited by Miki and published by Kogyo Chosakai Publishing in 1998.

When the multimedia contents transmission system is built, it may be a general manner to transmit multimedia contents stored in server computers to portable terminals with radio transceivers via wireless networks, decode, reconstruct and display the multimedia contents received at such portable terminals. For example, if the multimedia contents are video coded streams coded by an MPEG-4 format, the coded stream received in a portable terminal is decoded with an MPEG-4 decoder and the decoded video signal is displayed on a display device.

However, with regard to such conventional multimedia contents, there are following problems caused by restrictions existing in wireless networks and portable terminals.
(1) Due to limitations in the physical size and battery capacity, portable terminal cannot conduct a very complex data processing for reconstructing multimedia contents like video images. For example, the MPEG-4 video signal encoding method allows the use of a simple profile that directly compression-encodes video signals and a core profile that can divide background and human profile data into arbitrary shape objects and then compression-encode each of those object signals. However, since a complex data handling is required for the decoding and reconstructing core profile code streams that are core-profile compression-encoded contents, portable terminals have difficulty in reconstructing the contents received in the form of core profile code streams.
(2) Since the transmission bandwidth of networks used by portable terminals is limited, it is difficult to transmit multimedia contents of large size (high bit rate). Therefore, when video signals are compression-encoded and transmitted through wireless networks, the bit rate in coding must be kept low and then the quality of reconstructed video images declines.

As described above, when a multimedia contents transmission system is built along with portable terminals, the reconstruction of contents becomes hard to conduct due to limitations in the throughput of portable terminals. For example, it is difficult to reconstruct the video signals that have been compression-encoded into MPEG-4-based core profiles.

Also since the transmission bandwidth of networks used by portable terminals has a limitation and as a result the bit rate in coding must be kept low during the transmission of multimedia contents via wireless networks, there is another problem that the quality of reconstructed video images declines.

The object of this invention, therefore, is to provide a contents transmission system and a contents processing apparatus that can easily process the contents transmitted in the form of code streams that inherently require a complex data processing, for use in terminals like portable terminals of limited throughputs.

This invention provides a contents transmission system comprising a first terminal which receives a first code stream produced by compression-encoding contents and has a converter section converting the first code stream into a second code stream having a data size smaller than that of the first code stream and a transmission section transmitting the second code stream, and a second terminal which receives the second code stream transmitted from the first terminal and has a reconstruction section reconstructing the contents by decoding the second code stream. In this case, the first code stream is, for example, an MPEG-4-based core profile code stream, and the second code stream is an MPEG-4-based simple profile code stream.

According to this configuration, the contents transmitted in the form of the first code stream which requires a high throughput in encoding and reconstruction are converted into the second code stream having a data size smaller than that of the first code stream, and then it becomes possible for the second terminal corresponding to only the second code stream to conduct encoding and reconstruction.

This invention also provides a contents transmission system comprising a plurality of terminals including at least one terminal having a function of reconstructing contents by decoding the received code stream, and a transmission channel which connects such plurality of terminals to each other. The original content is reconstructed by collecting via the transmission channel the code stream received at each terminal, decoding the code streams and then combining the code streams.

According to this configuration, when a server, for example, transmits contents to each terminal in the form of a code stream, even if the channel for its transmission does not have a bandwidth large enough to carry a complex contents code stream of a large data size, it becomes possible to reconstruct such complex contents of a large data size by receiving segmented code streams at the plurality of terminals and collecting the code streams to at least one terminal for their decoding and combination.

Also this invention provides a contents transmission system comprising a plurality of terminals a first transmission channel which connects the plurality of terminals to each other, and a second transmission channel. The plurality of terminals includes a transmission section which transmit a code stream produced by compression-encoding contents via the second transmission channel. At least one of the terminals has a function of separating a code stream into a plurality of separated code streams, transmitting one of the separated code streams via the second transmission channel and transmitting the other separated code streams to the other terminals via the first transmission channel. The contents are reconstructed from the separated code streams transmitted from the plurality of terminals via the second transmission channel.

According to this configuration, when a terminal, for example, transmits contents to a server in the form of a code stream, even if the channel for its transmission does not have a bandwidth large enough to carry a complex contents code stream of a large data size, it becomes possible to transmit easily such a complex contents code stream of a large data size by splitting the code stream for transmission into several code streams in at least one terminal and transmitting the split code streams from each terminal to the server.

Further, this invention provides a contents transmission system comprising a plurality of terminals which each have functions of producing a code stream by encoding contents and reconstructing the contents by decoding the code stream, at least one of the terminals working as a server, a first network connecting the plurality of terminals to each other, a second network, and a transmission channel connecting the server to the second network. The server takes in a code stream from the second network through the transmission channel and distributes the code stream to the other terminals in the plurality of terminals.

According to this configuration, for example, several users may gather with terminals like portable information terminals and personal computers and form a first simplified network like a Bluetooth network. Then the users may have access to the terminal that works as a server in the second network like the Internet, and each terminal can share the contents in the second network to conduct various processing and jobs. Also it becomes easy to present and disclose contents on the second network.

In addition, this invention provides a contents processing apparatus comprising a receiver section which receives a first code stream obtained by encoding contents, a converter section which converts the received first code stream into a second code stream having a data size smaller than that of the first code stream, and a transmitter section which transmits the second code stream.

The converter section decodes, for example, the first code stream received by the receiver section, and produces the second code stream by encoding the contents obtained from this decoding by an encoding method different from that employed in the received code stream. As a result, the conversion from the first code stream to the second code stream is implemented. This converter section intakes, for example, an MPEG-4-based core profile code stream as the first code stream and converts it into an MPEG-4-based simple profile code stream.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram illustrating the schematic configuration of a contents transmission system according to the first embodiment of the invention;
FIG. 2 is a block diagram illustrating the configuration of a master terminal according to the first embodiment of the invention;
FIG. 3 is a block diagram illustrating the configuration of a slave terminal according to the first embodiment of the invention;
FIGS. 4A and 4B are diagrams illustrating an example of contents conversion according to the first embodiment of the invention;
FIGS. 5A and 5B are diagrams illustrating the contents conversion process in the contents converter section according to the first embodiment of the invention;
FIG. 6 is a block diagram illustrating the schematic configuration of a contents transmission system according to the second embodiment of the invention;
FIG. 7 is a block diagram illustrating the configuration of a terminal according to the second embodiment of the invention;
FIG. 8 is a diagram illustrating an example of the first contents processing according to the second embodiment of the invention;
FIG. 9 is a diagram illustrating an example of the second contents processing according to the second embodiment of the invention;
FIG. 10 is a diagram illustrating an example of the third contents processing according to the second embodiment of the invention;
FIG. 11 is a diagram illustrating an example of the forth contents processing according to the second embodiment of the invention;
FIG. 12 is a diagram illustrating an example of the fifth contents processing according to the second embodiment of the invention;
FIG. 13 is a diagram illustrating an example of the sixth contents processing according to the second embodiment of the invention;
FIG. 14 is a block diagram illustrating the schematic configuration of a contents transmission system according to the third embodiment of the invention;
FIG. 15 is a block diagram illustrating the configuration of a portable terminal according to the third embodiment of the invention;
FIG. 16 is a flow chart illustrating the operation of the portable terminal according to the third embodiment of the invention;
FIG. 17 is a block diagram illustrating the configuration of a personal computer according to the third embodiment of the invention;
FIG. 18 is a flow chart illustrating the operation of the personal computer according to the third embodiment of the invention; and
FIG. 19 is a block diagram illustrating the schematic configuration of a contents transmission system according to the forth embodiment of the invention.

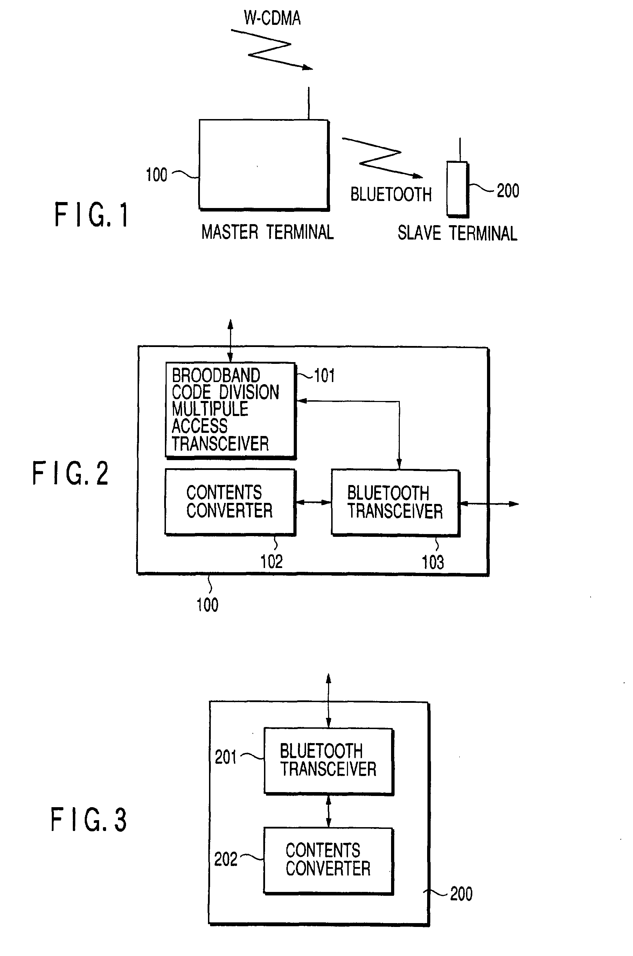

FIG. 1 shows the schematic configuration of a contents transmission system according to the first embodiment of the invention. This contents transmission system comprises a master terminal 100 and a slave terminal 200. The master terminal 100 receives the code streams of contents transmitted through broadband code division multiple access channels, for example, IMT-2000, W-CDMA, cdma 2000, DS-CDMA (direct sequence), MC-CDMA (multi carrier), from a server computer (not shown), and the slave terminal 200 receives the code streams of contents transmitted from the master terminal 100 through a short-range wireless communications system like Bluetooth.

The master terminal 100 is a contents processing apparatus having a high throughput in processing contents like video and speech/audio signals, compared with the slave terminal. The master terminal 100 can decode and reconstruct a contents code stream transmitted via a broadband code division multiple access channel with no difficulty. It is, for example, a portable or desktop personal computer.

On the other hand, the slave terminal 200 is a portable terminal like a handypone and a portable information terminal that has a lower throughput than the master terminal 100 because it places priority on energy saving and portability. Therefore, it cannot decode or reconstruct the complicated contents code stream sent through the broadband code division multiple access channel even if it has received and demodulated the contents code stream.

In the present embodiment of the invention, the master terminal 100 also converts the contents code stream which is sent through the broadband code division multiple access channel and requires a relatively complicated processing into a contents code stream requiring a relatively easy processing. In addition, the master terminal 100 transmits the converted contents code stream to the slave terminal 200 through the Bluetooth system. The slave terminal 200 decodes and reconstructs the contents code stream that it has received and demodulated. Then it becomes possible for the slave terminal 200 to decode and reconstruct the contents that are too complicated for the slave to reconstruct by itself. In the following description, the configurations of the master terminal 100 and the slave terminal 200 will be explained.

FIG. 2 shows the configuration of the master terminal 100. A wideband code division multiple access transceiver 101 receives and demodulates a first contents code stream requiring a high throughput in decoding and reconstruction. The first contents code stream is converted by a contents converter section 102 into a second contents code stream having a smaller data size than that of the first contents code stream. The second code stream is sent to a Bluetooth transceiver 103 and then modulated to be sent to the slave terminal 200 by Bluetooth. If the master terminal 100 is a personal computer, the wideband code division multiple access transceiver 101 and Bluetooth transceiver 103 are provided in the form of radio communications adapters like a wireless PCMCIA card, for example. The antenna used in the wireless transceivers can be mounted on the master terminal 100, a personal computer, as shown in FIG. 1. The contents converter section 102 will be described in detail later.

FIG. 3 is a diagram illustrating the configuration of the slave terminal 200. The contents code stream transmitted from the master terminal 100 is received and demodulated by a Bluetooth transceiver 201 and then decoded and reconstructed by a contents receiver 202.

The contents converter 102 of the master terminal 100 converts the first contents code stream requiring a high throughput in reconstruction into the second contents code stream requiring a lower throughput in reconstruction than that of the first contents code stream. In the case of such contents conversion, it may happen that the function of contents reconstruction that can be conducted by the master terminal 100 is not realized in the slave terminal 200. However, it does not happen that the slave terminal 200 can view no converted contents. Although the function is limited to some extent, it can reconstruct the contents. A specific example of this contents converter 102 is described below.

For example, a stream of the core file in the MPEG-4 Visual (hereafter, core profile code stream) has more than one arbitrary shape of visual objects and it is possible to handle each of the objects separately. However, a core profile core stream has complicated contents and requires a high throughput in contents reconstruction. On the other hand, a simple profile stream in the same MPEG-4 Visual has a usual frame structure and can handle a single video image, while it does not demand a high throughput in contents reconstruction.

Suppose a case in which the slave terminal 200 cannot decode or reconstruct a core profile code stream but can decode and reconstruct a simple profile code stream. In this case, the contents converter 102 in the master terminal 100 converts a core profile code stream including a plurality of arbitrary shapes of visual objects into a simple profile code stream of a single frame structure. The contents converter section 102 inputs the converted simple profile code stream to the Bluetooth transceiver 103. The Bluetooth transceiver 103 transmits the converted simple profile code stream to the slave terminal 200 by Bluetooth.

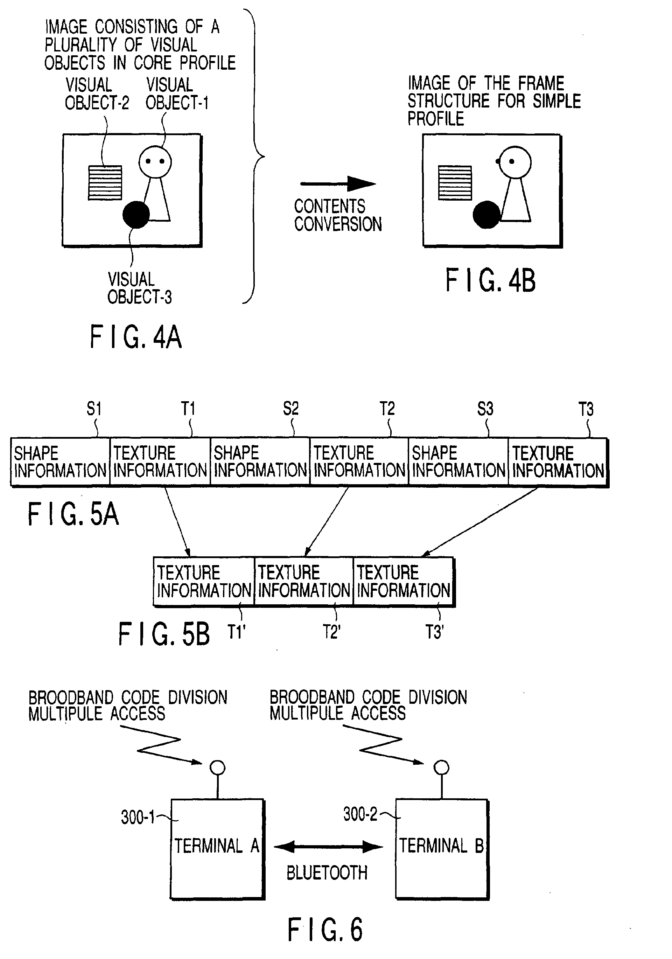

The slave terminal 200 now can decode and reconstruct the contents of the core profile. Namely, although the slave terminal 200 alone cannot directly decode a plurality of arbitrary shapes of visual objects of the core profile, it can view the contents by decoding the objects into images of the simple profile of a single frame structure. FIGS. 4A and 4B show such an example. Although there are three visual objects in the image before contents conversion in FIG. 4A, they are converted into an image of a single frame structure after contents conversion in FIG. 4B.

FIGS. 5A and 5B show an example of specific contents conversion (code stream conversion) by the contents converter section 102. FIG. 5A shows a core profile code stream before conversion, while FIG. 5B shows a simple profile code stream after conversion. As shown in FIG. 5A, the core profile code stream includes shape information S1, S2 and S3 indicating the contours of video objects or boundaries between the video objects and the background, and texture information T1, T2 and T3 indicating the contents of objects. When this core profile code stream is converted into a simple profile code stream, only texture information T1, T2 and T3 are taken out from this core profile code stream. If necessary, texture information T1, T2 and T3 are transformed to a code stream of texture information T1', T2' and T3' arrayed as shown in FIG. 5B. The slave terminal 200 can display the contents on a contents receiver 202 in the form of image of a single frame structure, even based on the texture information alone.

In the present embodiment of this invention, even the slave terminal 200 like a portable terminal of a limited throughput can reconstruct and view via Bluetooth contents information received by a master terminal of a high throughput via the broadband code division multiple access channel.

In the above explanation, visual objects of MPEF-4 Visual were exemplified. However, the above method can be applied to audio objects like speech and music, and the similar effects can be obtained by a similar contents conversion.

Also in the above explanation, the master terminal 100 receives a contents code stream transmitted from a server and transmits the converted contents code stream to the slave terminal 200, while the slave terminal 100 receives a contents code stream sent from the master terminal 200. However, it is possible in the present embodiment to transmit data to a server through the broadband code division multiple access channel. Also the slave terminal 200 can transmit data to the master terminal 100 by Bluetooth. Since this form of implementation is not directly related with the goal of this invention, its explanation is not provided here.

FIG. 6 shows a contents transmission system according to the second embodiment of the present invention. This contents transmission system comprises a terminal A300-1 and terminal B300-2. The terminals A300-1 and B300-2 receive contents code streams via the broadband code division multiple access channel and demodulate them. They are configured to exchange such received code streams between the terminals A300-1 and B300-2 by means of Bluetooth; namely, they can communicate with each other.

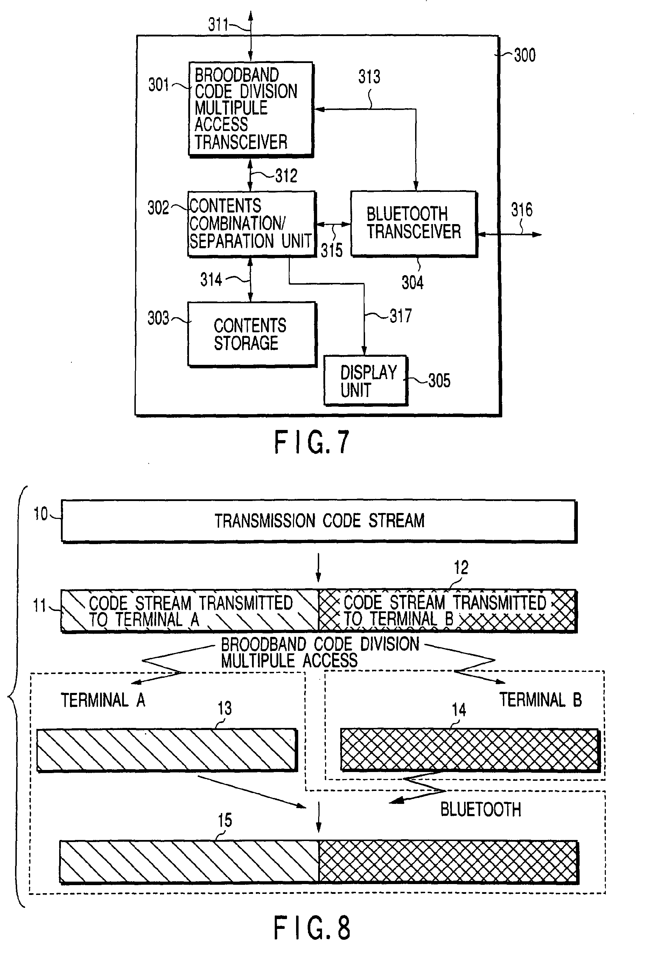

FIG. 7 is a detailed configuration of a terminal 300 including terminals A300-1 and B300-2. This terminal 300 comprises a wideband code division multiple access transceiver 301, contents combination/ separation device 302, contents storage 303, Bluetooth transceiver 304 and display device 305. The contents combination/separation device 302 has a function of decoding contents code streams and encoding contents. In this example, each function block is explained for the case where the terminal 300 receives data.

The wideband code division multiple access transceiver 301 receives and demodulates a code stream 311 transmitted from a server (not shown). When the terminal 300 is a terminal A300-1 and this terminal A300-1 is requested for contents by the other terminal B300-2, the received code stream 313 is transferred from the wideband code division multiple access transceiver 301 to the Bluetooth transceiver 304 and then transmitted to the terminal B300-2.

The received code stream 312 sent from the wideband code division multiple access transceiver 301 is transferred to the contents combination/separation device 302. The contents combination/separation device 302 combines the received code stream 312 sent from the wideband code division multiple access transceiver 301 and the received code stream 315 sent from the Bluetooth transceiver 304 after decoding them in order to reconstruct the contents. At this time it is also possible to reconstruct the contents 314 stored in the contents storage 303.

Unless the received code stream 315 to be combined is outputted from the Bluetooth transceiver 304, it is possible that the contents combination/separation device 302 decodes only the received code stream 312 sent from the wideband code division multiple access transceiver 301 for reconstruction and reconstructs only the contents stored in the contents storage 303. Contents 314 and 317 thereby reconstructed by the contents combination/separation device 302 are stored in the contents storage 303, if necessary, and displayed on the display device 305.

In addition to the above contents combination (reconstruction), the contents combination/separation device 302 can also separate contents stored in the contents storage 303, those obtained by decoding the code stream 312 sent from the wideband code division multiple access transceiver 301 and those obtained by decoding the code stream 315 sent from the Bluetooth transceiver 304.

Next, a specific example of contents transmission conducted in the present embodiment of the invention will be explained below with reference to FIGS. 8-13.

The present embodiment enables to reconstruct complex contents of a large amount of data by splitting a code stream into a plurality of code streams and sending them across the terminals A300-1 and B300-2, collecting them in a single terminal by means of Bluetooth and decoding them, and then combining them, even if a single broadband code division multiple access channel does not have a bandwidth large enough to send code streams of complex contents of a large data size (for example, core profile code streams).

FIG. 8 shows a first example of contents transmission. For example, a server (not shown) splits the code stream 10 of complex contents of a large data size into two code streams 11 and 12, according to the bandwidth of the broadband code division multiple access channel, and then transmits them to terminals A300-1 and B300-2, respectively. The transmitted code streams 11 and 12 are received and demodulated in terminals A301 and B302 by the wideband code division multiple access transceiver 301 as received code streams 13 and 14.

The terminal B302 demodulates the received code stream 14 with the Bluetooth transceiver 316 and transmits it to the terminal A301. The terminal A301 combines the received code stream 313 sent from the wideband code division multiple access transceiver 301 with the received code stream 314 sent from the Bluetooth transceiver 304 after decoding it with the combination/separation device 302. The contents 15 which are the same as those of the original code stream 10 are reconstructed and then stored in the contents storage 303.

In the above manner, terminals A301 and B302 in cooperation receive and decode the code stream 10 of a great data size which exceeds the throughput of a single broadband code division multiple access channel. Then original complex contents can thereby be reconstructed. In this case, since in the terminals A301 and B302 the contents combination/separation device 302 decodes the divided code streams, the data processing is easier than decoding a code stream that has not been divided.

In the present embodiment of the invention, it is also possible to send code streams of complex contents of a large data size (for example, core profile code streams), conversely, from the terminals A301 and B302 to a server.

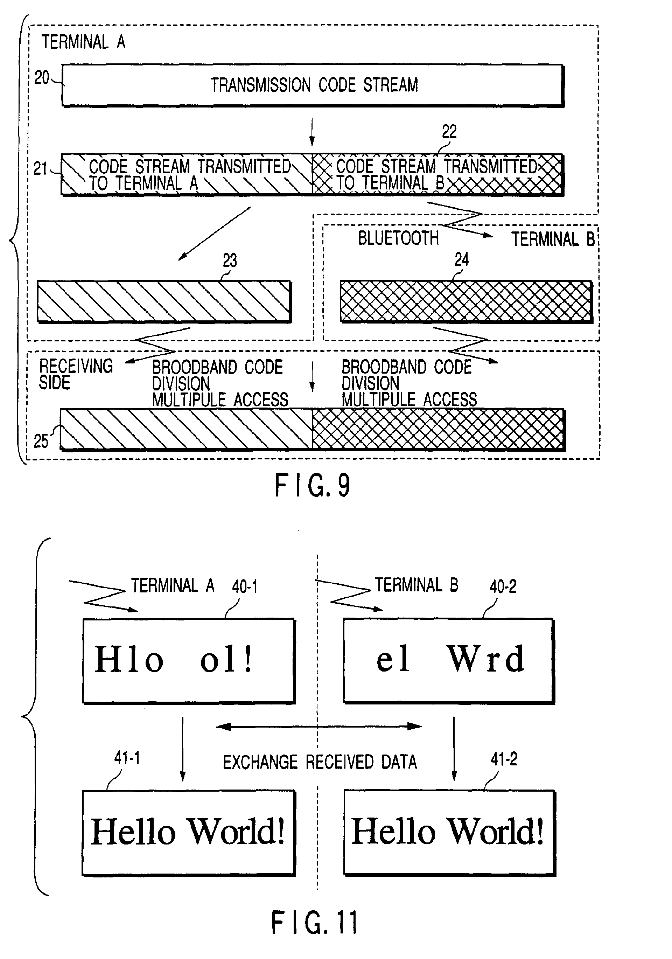

FIG. 9 shows a second example of contents transmission. For example, the contents combination/ separation device 302 splits complex contents of a large data size stored in the contents storage 303 into two parts responding to the bandwidth of the broadband code division multiple access channel and then encodes them into two code streams 21 and 22 for transmission in the terminal A301. The code stream 21 is modulated by the wideband code division multiple access transceiver 301 and transmitted to a server as a code stream 23. The code stream 22 is sent to the terminal B302 after modulated by the Bluetooth transceiver 304. The terminal B302 modulates the received and demodulated code stream 24, using the wideband code division multiple access transceiver 301, and then transmits it to a server. The server reconstructs complex contents of a large data size by combining the code streams 23 and 24 sent from terminals A301 and B302, respectively, into a code stream 25 and then decodes this code stream.

In this case, since the terminals A301 decodes two code streams divided by the contents combination/ separation device 302, the data processing becomes easier than directly decoding a code stream of complex contents of a great data size that has not been divided.

The first example of contents transmission has explained the method (FIG. 8) of collecting the divided code streams of complex contents of a large data size and then reconstructing them, while the second one has described the method (FIG. 9) of transmitting a code stream of complex contents of a large data size with a single terminal A301 which works as a master. It is also possible that both terminals A301 and B302 conduct similar processing and reconstruct complex contents of a large data size.

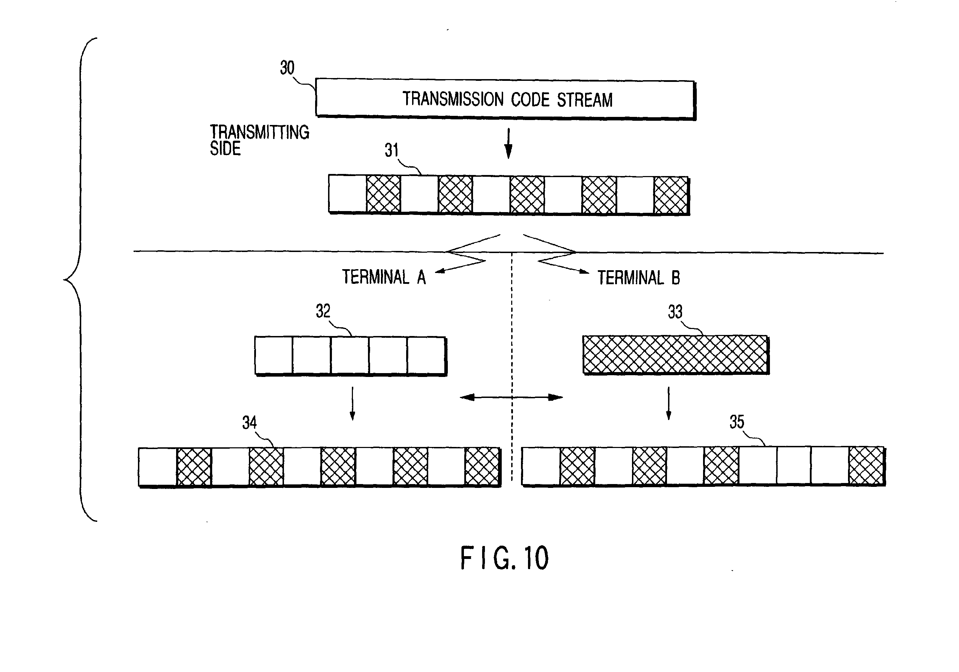

FIG. 10 shows a third example of contents transmission. For example, a server splits the code stream of complex contents of a large data size into two parts and sends the two split code streams 31 to terminal A301 and B302 respectively through the broadband code division multiple access channel. Terminals A301 and B302 receive code streams 32 and 33, respectively. The terminal A301 transmits the code stream 32 that has been received by the wideband code division multiple access transceiver 301 and modulated by the Bluetooth transceiver 304, while in the terminal B302 the code stream 33 which has received and decoded by the wideband code division multiple access transceiver 301 is transmitted to the terminal A301 by the Bluetooth transceiver 304.

In terminals A301 and B302, the code stream received and demodulated by the wideband code division multiple access transceiver 301 and that received and demodulated by the Bluetooth transceiver 304 are decoded by the contents combination/separation device 302 and then combined. Thereby, contents 34 and 35 which are the same as the original contents made of the code stream 30, are each reconstructed and stored in the contents storage 303. Even in this case, since in terminals A301 and B302 the contents combination/ separation device 302 decodes and combines the two split code streams, the data processing is easier than directly decoding the code stream that has not been split (or combined).

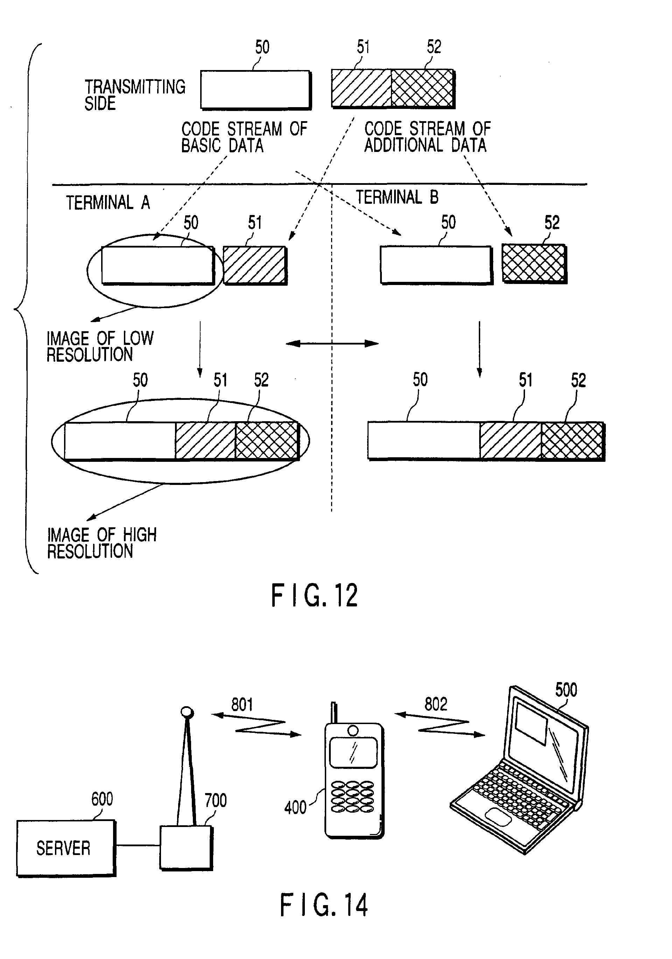

FIG. 11 illustrates the forth example of contents transmission according to the embodiment of the invention. When separate code streams 40-1 and 40-2 are sent to terminals A301 and B302 through the broadband code division multiple access channel, for example, meaningful information is not obtained from each code stream alone received in terminals A301 and B302 independently. In this example of contents transmission, code streams 41-1 and 41-2 can be transmitted to form meaningful information by exchanging and combining contents 40-1 and 40-2 through Bluetooth channels, for example, which have been received, demodulated and decoded by terminals A301 and B302, respectively.

For example, if contents like hints for a game and a map of treasury are split into two code streams 40-1 and 40-2 and then sent out, the details of the contents cannot be not recognizable when those code streams are each received by terminals A301 and B302 separately. However, if the code streams 40-1 and 40-2 received by terminals A301 and B302 respectively are combined after decoding, information pieces 41-1 and 41-2 that go into details of the contents are provided.

Also when a server sends a code stream to a terminal (either terminal A301 or terminal B302), if the code stream is split and transmitted over several times, a single piece of the code stream alone does not make sense but, if those split code streams are decoded and combined, they make meaningful information.

FIG. 12 shows a fifth example of contents transmission. According to this fifth example, when a server sends a code stream of image data of contents to terminals A301 and B302 through the broadband code division multiple access channel, this code stream may be divided into a code stream 50 which is basic data and two code streams 51 and 52 which are additional data for high resolution display. The basic code stream 50 is, for example, the DC element of the quantized DCT coefficient of the code stream provided by an MPEG-4 video signal encoder, while the additional code streams 51 and 52 for high resolution display are AC elements of the quantized DCT coefficient.

The basic code stream 50 is sent to both terminals A301 and B302, while the two additional code streams for high resolution display are sent to terminals A301 and B302, respectively.

In this case, low resolution images are provided in terminals A301 and B302 when the basic code stream 50 sent through the broadband code division multiple access channel is decoded. On the other hand, a high resolution image can be recovered by exchanging through Bluetooth channels, decoding, combining and reconstructing the additional code streams 51 and 52 which have been received in terminals A301 and B302 through the broadband code division multiple access channel.

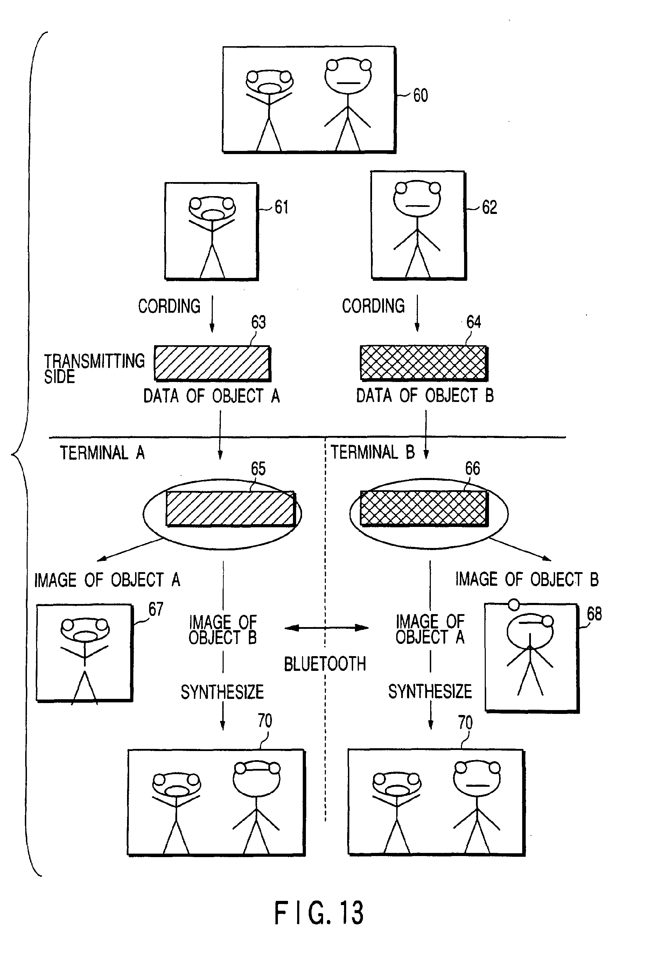

FIG. 13 illustrates a sixth example of contents transmission which utilizes the feature wherein each of the MPEG-4 objects can be encoded separately. In this example, the original image is divided into the background and objects, and they are each encoded and then their code streams are transmitted.

For example, a server splits the contents 60 (original image) having two objects (A and B) into two contents 61 of object A and contents 62 of object B, and then encode these contents. Later, the code stream 63 of contents 61 is sent to the terminal A301 through the broadband code division multiple access channel, while the code stream 64 of contents 62 is sent to terminal B302.

Terminals A301 and B302 each receive code streams 63 and 64 respectively through the broadband code division multiple access channel, and decode the received code streams 65 and 66 in order to reconstruct the contents 67 and 68 (the same as contents 61 and 62) having only the object A data or the object B data, respectively. Terminals A301 and B302 exchange received code streams 65 and 66 through Bluetooth channels, for example, and decode them in each terminal for reconstruction. Then the contents 70 which are the same as the original contents 60 having objects A and B are recovered.

The terminals A301 and B302 each exchange received code streams and combine them. As a result, compared with the case where terminals A301 and B302 each receive the whole code stream including the data of objects A and B through the broadband code division multiple access channel, the data size transmitted in the broadband code division multiple access channel is reduced. Then the traffic in the broadband code division multiple access channel can be lightened and the expense of broadband code division multiple access channel that a terminal user have to pay can also be reduced.

It is also possible that a plurality of terminals receive MPEG-4 based code streams from separate servers and terminals through the broadband code division multiple access channel and exchange data through Bluetooth channels for data combination. For example, a terminal user may call the terminal of his or her friend to receive video data and exchange data to introduce each other and share such video data.

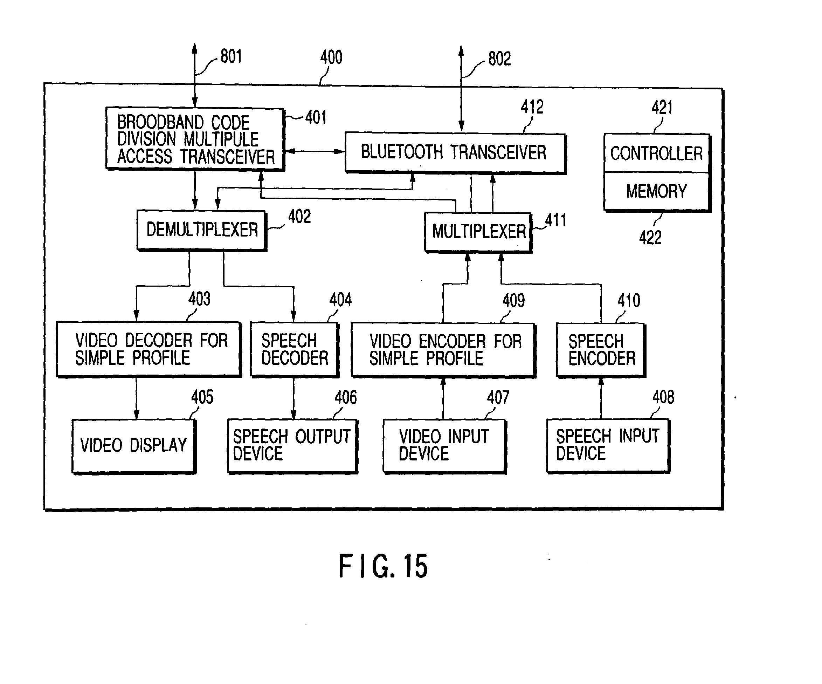

FIG. 14 illustrates the configuration of a contents transmission system according to the third embodiment of the present invention. This contents transmission system comprises a portable terminal 400, a personal computer 500, a server 600 and a radio transceiver 700.

In the server 600, compression-encoded multimedia contents are stored. The server 600 is connected to the radio transceiver 700, while the radio transceiver 700 and the portable terminal 400 are connected through the broadband code division multiple access channel 801. Namely, it is possible to send a code stream of multimedia contents stored in the server 600 from the radio transceiver 700 to the portable terminal 400 through the broadband code division multiple access channel 801. It is also possible to send a code stream of multimedia contents from the portable terminal 400 to the server 600 through the broadband code division multiple access channel 801 and the radio transceiver 700.

The portable terminal 400 and the personal computer 500 are connected by a Bluetooth channel 802, and the transmission and reception of multimedia contents are enabled by Bluetooth.

### <Portable Terminal 400>

FIG. 15 shows a block diagram that illustrates the detailed configuration of the portable terminal 400. As shown in this figure, this portable terminal 400 comprises a wideband code division multiple access transceiver 401, a demultiplexer 402, a simple profile decoder 403, a speech decoder 404, a video display 405 such as LCD and CRT, an audio output device 406 like speakers, a video input device 407 like video cameras, a speech input device 408 like microphones, a simple profile video encoder 409, a speech encoder 410, a multiplexer 411, a Bluetooth transceiver 412, a controller (CPU) 421 and a memory 422.

Now suppose that the simple profile decoder 403 and the simple profile encoder 409, with priority on improving portability and reducing power consumption of the portable terminal 400, can decode and encode only a simple profile code stream whose data processing load is light but cannot decode or encode a core profile code stream.

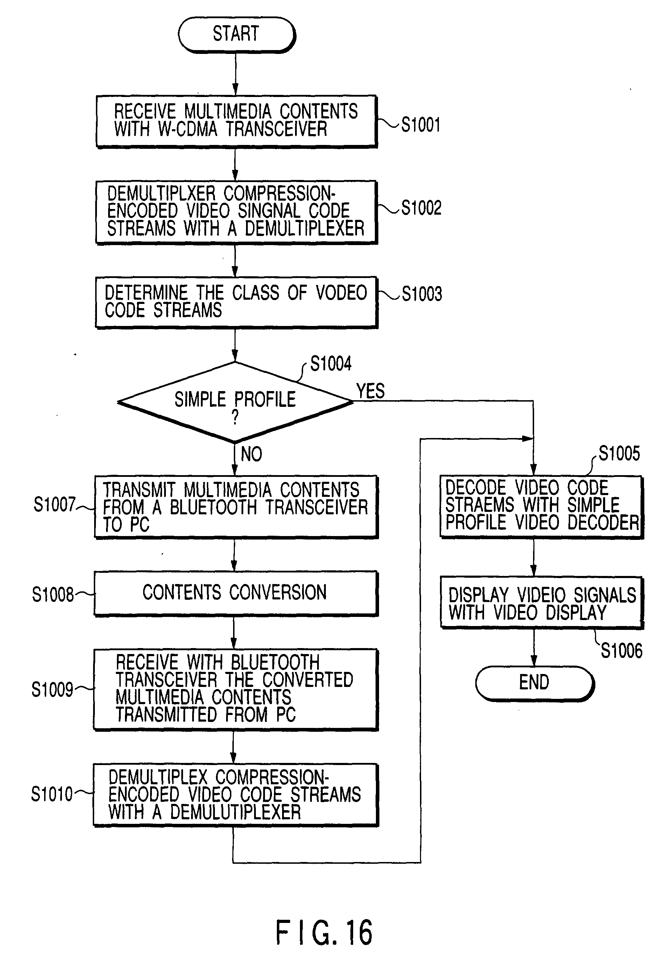

Referring now to the flow chart of FIG. 16, the operations conducted in the portable terminal 400 are explained for the case where it receives the code stream of the multimedia contents sent via the broadband code division multiple access channel 801. This data processing is controlled by the controller 421 according to a control program stored in the memory 422.

First, the wideband code division multiple access transceiver 401 receives a video compression-code stream sent via the broadband code division multiple access channel 801 (S1001) and then the demultiplexer 402 demultiplexes the video compression-code stream (S1002). Next, the class of the demultiplexed video compression code streams is identified (S1003). Specifically, it is determined whether it is a MPEG-4-based simple profile code stream or a MPEG-4-based core profile code stream. If it is a simple profile code stream (if Yes at S1004), the simple profile video decoder 403 decodes the video compression code stream (S1005) and displays the video image (S1006) with the video display unit 405.

If the video compression code stream demultiplexed at Step S1002 is not a simple profile code stream (if No at S1004), in other words, if it is a core profile code stream, the Bluetooth transceiver 412 transmits the video compression code stream of multimedia contents to the personal computer 500 (S1007). The personal computer 500 converts the core profile code stream into a simple profile code stream, as described in detail later (S1008). The Bluetooth transceiver 412 receives the converted video compression code stream of multimedia contents sent from the personal computer 500 (S1009), demultiplexes the video compression code stream with the demultiplexer 402 (S1010), decodes it with the simple profile video decoder 403 (S1005), and displays a video image with the video display unit 405 (S1006).

In this embodiment of the invention, the multimedia contents sent via the broadband code division multiple access channel 801 include a speech code stream (hereafter, a speech compression code stream) which is a speech signal encoded by speech-use coding methods like GSM, ITU-TG. 723.0, G.279, and an audio code stream (hereafter, an audio compression code stream) which is an audio signal encoded by audio-use coding methods like AAC, Twin VQ and MPEG AUDIO. The speech decoder 404 can decode a speech compression code stream which does not require a high throughput. If it cannot decode a speech compression code stream which requires a high throughput, it conducts the following processing, although this processing is not shown in the flow chart of FIG. 16.

After the wideband code division multiple access transceiver 401 receives a speech compression code stream or an audio compression code stream of multimedia contents (speech/audio compression code streams) sent through the broadband code division multiple access channel 801, its class, namely whether it is a speech compression code stream or an audio compression code stream, is determined. If it is a speech compression code stream, the speech decoder 404 decodes the stream and the speech output device 406 provides the speech.

Unless the speech/audio compression code stream demultiplexed by the demultiplexer 402 is a speech compression code stream, namely, if it is an audio compression code stream, the code stream of multimedia contents including it is sent to the personal computer 500 by the Bluetooth transceiver 412. The personal computer 500 converts the audio compression code stream into a speech compression code stream, as described in detail later. The Bluetooth transceiver 412 receives the converted speech compression code stream of multimedia contents sent via the Bluetooth channel, while the demultiplexer 402 demultiplexes the speech compression code stream. The demultiplexed speech compression code stream is decoded by the speech decoder 404, and the recovered speech is provided by the speech output device 406.

### <Personal Computer 500>

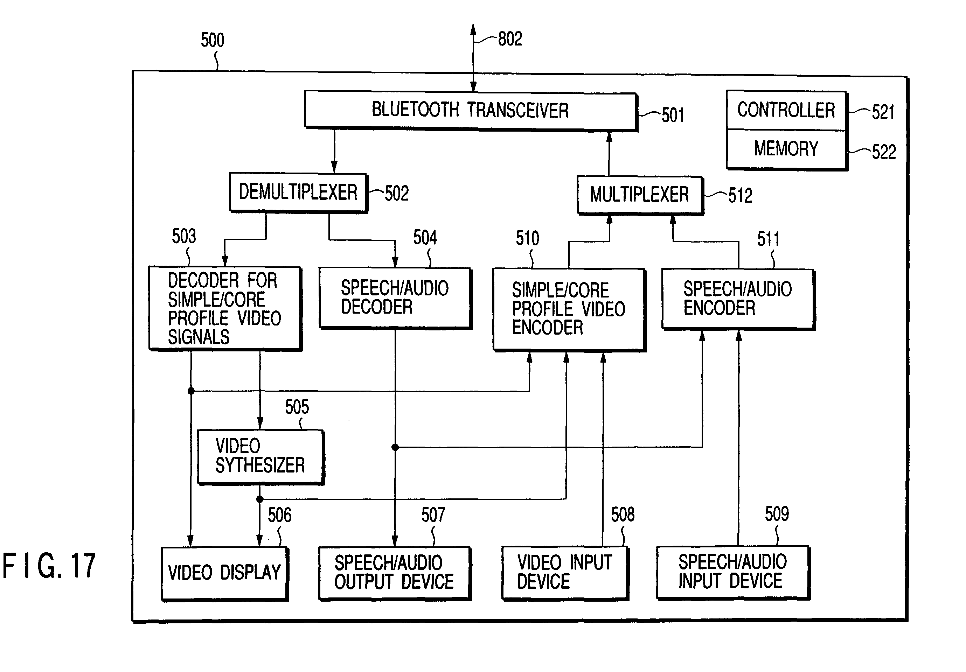

Referring now to FIG. 17, the personal computer 500 is explained. FIG. 17 is a function block diagram illustrating the detailed configuration of the personal computer 500. As described in FIG. 17, the personal computer 500 comprises a Bluetooth transceiver 501, a demultiplexer 502, a simple/core profile video decoder 503, a speech/audio decoder 504, a video synthesizer 505, a video display 506 like LCD and CRT, a speech/audio output device 507, a video input device 508 like video cameras, a speech input device 509 like microphones, a simple/core profile video encoder 510, a speech/audio decoder 511, a multiplexer 512, a controller (CPU) 521 and a memory 522.

The simple/core profile video decoder 503 has a function of decoding a simple profile code stream, like the simple profile video decoder 403 shown in FIG. 15, and another function of decoding a core profile code stream. Also the simple/core profile video encoder 510 has a function of encoding video contents into a simple profile code stream, like the simple profile video encoder 409 shown in FIG. 15, and another function of encoding video contents into a core profile code stream.

Similarly, the speech/audio decoder 504 has a function of decoding a speech compression code stream, like the speech decoder 503 shown in FIG. 15, and another function of decoding an audio compression code stream. Also the speech/audio encoder 511 has a function of encoding speech/audio contents into a speech compression simple profile code stream, like the speech encoder 410 shown in FIG. 15, and another function of encoding speech/audio contents into an audio code stream.

Since the personal computer 500 is not required to have such portability and power saving capability that the portable terminal 400 must have, it is no problem to have a simple/core profile video decoder 503 that needs a high data processing capability, a speech/audio decoder 504, a simple/core profile video encoder 510 and a speech/audio encoder 511.

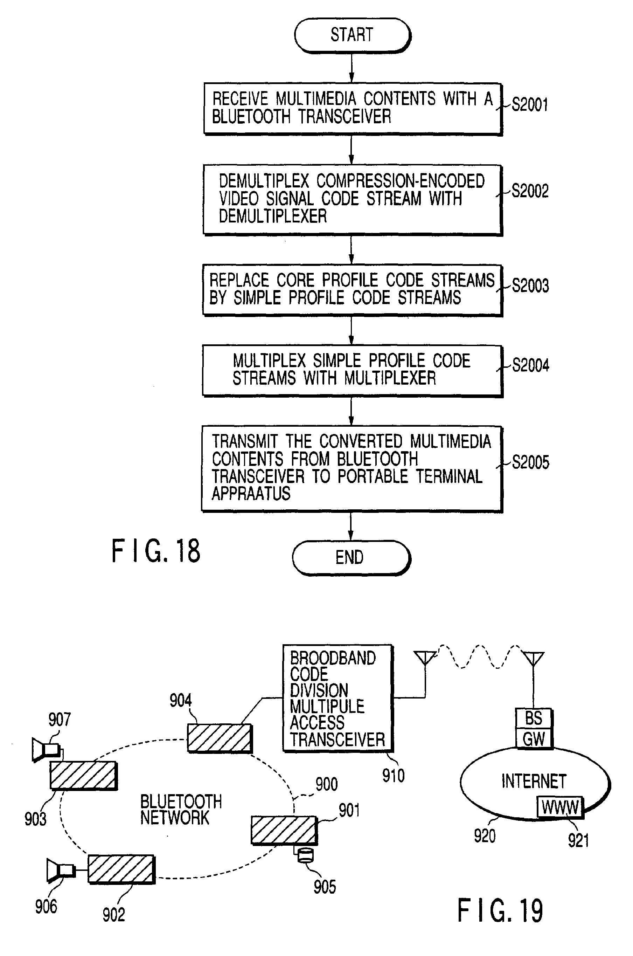

Referring now to the flow chart of FIG. 18, the communication procedures taken between the portable terminal 400 that has the received code stream of multimedia contents via the broadband code division multiple access channel 801 and the personal computer 500 are explained. These communication procedures are controlled by the controller 521 based on a control program that has been stored in the memory 522.

First, the Bluetooth transceiver 501 receives the video compression code stream of multimedia contents sent from the portable terminal 400 (S2001), and the demultiplexer 502 demultiplexes the video compression code stream (S2002). In this case, the video compression code stream is a core profile code stream, and it is converted into a simple profile code stream (S2003).

The conversion from the core profile code stream to a simple profile code stream is first conducted by the decoding of core profile code stream with the simple/core file video decoder 503 and then by the encoding of the resulting image contents into a simple profile code stream with the simple/core profile video encoder 510. The conversion from a core profile code stream to a simple profile code stream may be conducted by the contents conversion method described in FIGS. 5A and 5B for the first embodiment of the present invention.

Next, the multiplexer 512 multiplexes the converted simple profile code stream (S2004), and the Bluetooth transceiver 501 modulates it to transmit it to the portable terminal 400 as a code stream of multimedia contents (S2005).

On the other hand, if the multimedia contents transmitted from the portable terminal 400, received and decoded by the Bluetooth transceiver 501, include an audio compression code stream, it is demultiplexed by the demultiplexer 502 and decoded by the speech/audio decoder 404. The obtained audio contents are converted into a speech compression code stream by the speech/audio encoder 511 and then multiplexed by the multiplexer 512. Later, they are demodulated by the Bluetooth transceiver 501 and then transmitted to the portable terminal 400 as the code streams of multimedia contents.

Also the following forms of contents transmission are possible in this embodiment of the invention. For example, in the portable terminal 400, the video signal entered from the video input device 407 is encoded into a simple profile code stream by the simple profile video encoder 409 and then sent to the personal computer 500 through the multiplexer 411 and the Bluetooth transceiver 412.

On the other hand, in the personal computer 500, the demultiplexer 502 demultiplexes the simple profile code stream which has been transmitted from the portable terminal 400 by means of Bluetooth, received and demodulated by the Bluetooth transceiver 501, and then decoded by the simple/core profile video decoder 503. A plurality of video objects in the obtained video contents are combined by the image synthesizer 505 and then displayed as video images on the video display 506.

The video contents decoded by the simple/core profile video decoder 503 are encoded into a core profile code stream by the simple/core profile video encoder 510. It can be the case in which the video signal entered from the video input device 508 in the personal computer 500 is encoded as separate video objects into core profile code streams by the simple/core profile video encoder 510, and then these two series of core profile code streams provided by the simple/core profile video encoder 510 are multiplexed by the multiplexer 512 to be transmitted to the portable terminal 400 by the Bluetooth transceiver 501. Also the core profile code stream transmitted from the personal computer 500 to the portable terminal 400 may be sent to another personal computer (not shown) by the wideband code division multiple access transceiver 401 in the portable terminal 400.

FIG. 19 illustrates the schematic configuration of a contents transmission system according to the forth embodiment of the present invention. In this system, a group of terminals 901-904 comprising personal computers or portable terminals are connected to each other through a simplified network 900 (hereafter, Bluetooth network) of which lower layer is Bluetooth. At least one of the terminals 901-904, for instance terminal 904 in this example, has a function of generating and reconstructing the code streams of contents, working as a server terminal. To be more specific, this server terminal 904 works as a network gateway and a media processing server as well as a web server.

The network gateway function of the terminal 904 enables the Bluetooth network 900 to be connected to the Internet 920. The transmission channel connecting the Bluetooth network 900 and the Internet 920 is the broadband code division multiple access channel 910 in this example.

This configuration makes it possible that terminals 901-904 on the Bluetooth network 900, for example, can use resources on the Internet through a relatively wide bandwidth and that those terminals 901-904 in cooperation can transmit a variety of contents to the Internet 920.

Described specifically, the compression code stream of multimedia contents existing in the Internet 920, for example, is entered to the terminal 904 which works as a gateway through the broadband code division multiple access channel 910, and the compression code stream of multimedia contents is distributed to the other terminals 901-903 on the Bluetooth network 900. Then the terminals 901-903 can share contents in the Internet 920 in an efficient way with no need of each having a separate interface with the Internet 920.

As a plurality of users possessing portable terminals and portable personal computers temporarily build a simplified network using, for example, Bluetooth for access to the Internet at a local site, they can share a variety of contents and cooperate in work. The following are other examples illustrating cooperative operations between terminals 901-904 on the Bluetooth network 900.

For example, original image code streams, which have been obtained by an MPEG-4-based video compression encoding in terminals 901-903 of video information captured by video cameras 906, 907 connected to the terminals 901-903 or by reading out MPEG-4-based video compression encode streams stored in a contents storage 905 mounted in a terminal 901, are transferred via the Bluetooth network 900 to the terminal 904 that works as a media processing server.

The terminal 904 working as a media processing server combines video compression code streams sent from a plurality of terminals through the Bluetooth network 900 on a real time basis to produce a new MPEG-4 based video compression code stream. By transferring such the video compression code stream to a web server 921, for example, on the Internet 920 via the broadband code division multiple access channel 910, it becomes possible to disclose the video image data in cooperation among terminals on the Bluetooth network 900 that has been temporarily built at a local site.

It is also possible not to transfer the new video compression code stream produced by the terminal 904 working as a media processing server to the web server 921 on the Internet 920 but to make the terminal 904 work as a web server that disclose contents to terminals through access from the Internet 920 via the broadband code division multiple access channel 910.

In this embodiment of the present invention, a plurality of terminals such as personal computers can easily cooperate with each other through a temporal network built by a simplified short-range wireless communication means like Bluetooth. By connecting this simplified network to the Internet and other large-scale networks through the broadband code division multiple access channel for example, it also becomes possible even on the simplified network to utilize efficiently resources on such large-scale networks like the Internet and to present and disclose the code stream of contents produced by cooperative processing to third parties.

In the above embodiments, the broadband code division multiple access channel and Bluetooth channels have been employed. However, the configuration of the transmission system according to the present invention is not limited to only those channels. Indeed, it is appreciated by those having skill in the art that the present invention can be realized by using other types of wireless and wired transmission channels.

As described above, the present invention makes terminals like portable terminals of relatively low throughput possible to provide a contents transmission system and a contents processing apparatus which can easily handle the contents transmitted as a code stream like a MPEG-4 core profile code stream which requires a complex data processing during decoding and reconstruction.

## Claims

1. A contents transmission system characterized by comprising:
a first terminal (100) configured to receive a first code stream produced by compression-encoding contents, and having a converter section (102) for converting
the first code stream into a second code stream having a data size smaller than that of the first code stream, and a transmission section transmitting the second code stream; and
a second terminal (200) configured to receive the second code stream transmitted from said first terminal, and have a reconstruction section reconstructing the contents by decoding the second code stream.

2. The contents transmission system according to claim 1, **characterized in that** said converter section (102) converts an MPEG-4-based core profile code stream corresponding to the first code stream into an MPEG-4-based simple profile code stream corresponding to the second code stream.

3. The contents transmission system according to claim 1 or 2, **characterized in that** said first terminal
comprises a personal computer (1.00) and said second terminal comprises a portable terminal (200).

4. The contents transmission system according to claim 1, 2 or 3 **characterized in that** said first terminal
(100) transmits and receives the first code stream by wideband code division multiple access and transmits and receives the second code stream by Bluetooth.

5. The contents transmission system according to claim 1, 2 or 3 **characterized in that** said converter section
(102) converts the first code stream transferred from said second terminal (200) into the second code stream and transferring the converted second code stream to said second terminal.

6. The contents transmission system according to claim 5, **characterized in that** said first code stream includes an MPEG-4-based core profile code stream and the second code stream includes an MPEG-4-based simple profile code stream.

7. A contents transmission system
comprising:
a plurality of terminals (A, B) including at least one terminal which receives a code stream produced by compression-encoding contents and decodes the code stream to reconstruct the contents;
a transmission channel connecting said plurality of terminals to each other; and
a contents processor device (302) which gathers to at least one of said terminals the code streams received by said plurality of terminals via said transmission channel, decodes the code streams, and then combines the code streams to reconstruct the original contents.

8. The contents transmission system according to claim 7, **characterized in that** said transmission channel comprises a Bluetooth channel.

9. A contents transmission system which comprises:
a plurality of terminals (A, B);
a first transmission channel which connects said plurality of terminals to each other; and
a second transmission channel; and
wherein said plurality of terminals includes a transmission section (304) configured to transmit a code stream produced by compression-encoding contents via said second transmission channel, at least one of said terminals has a function of separating a code stream into a plurality of separated code streams, transmitting one of the separated code streams via said second transmission channel and transmitting the other separated code streams to the other terminals via said first transmission channel, and
the contents are reconstructed from the separated code streams transmitted from said plurality of terminals via said second transmission channel.

10. A contents transmission system characterized by comprising:
a plurality of terminals (A, B) which each have functions of producing a code stream by encoding contents and reconstructing the contents by decoding the code stream, at least one of said terminals working as a server;
a first network connecting said plurality of terminals to each other;
a second network; and
a transmission channel connecting said server to said second network, said server taking a code stream from said second network through said transmission channel and distributing the code stream to the other terminals in said plurality of terminals.

11. A contents transmission system which comprises:
a plurality of terminals (A, B) which each have functions of producing a code stream by encoding contents and reconstructing the contents by decoding the code stream, at least one of said terminals working as a server;
a first network connecting said plurality of terminals to each other;
a second network; and
a transmission channel connecting said server to said second network; and
wherein said server combines code streams produced by the other terminals in said plurality of terminals and transmits the combined code stream to said second network through said transmission channel.

12. A contents processing apparatus comprising:
a receiver section (101) which receives a first code stream obtained by encoding contents;
a converter section (102) which converts the received first code stream into a second code stream having a data size smaller than that of the first code stream; and
a transmitter section (103) which transmits the second code stream.

13. The contents processing apparatus according to claim 12, **characterized in that** said converter section (102) converts an MPEG-4-based core profile code stream corresponding to the first code stream into an MPEG-4-based simple profile code stream corresponding to the second code stream.

14. The contents processing apparatus according to claim 12, **characterized in that** said receiver section (101) receives the first code stream by wideband code division multiple access, and said transmitter section (103) transmits the second code stream by Bluetooth.

15. A contents processing apparatus characterized by comprising:
a first terminal (100) having a converter section (102) which converts a first code stream produced by compression-encoding contents into a second code stream having a data size smaller than that of the first code stream; and
a second terminal (200) reconstructing the contents by decoding the second code stream, receiving the first code stream and transferring the received first code stream to said first terminal,
said converter section (102) converting the first code stream transferred from said second terminal into the second code stream and transferring the converted second code stream to said second terminal.

16. The contents processing apparatus according to claim 15, **characterized in that** said first code stream includes an MPEG-4-based core profile code stream and said second code stream includes an MPEG-4-based simple profile code stream.

17. The contents processing apparatus according to claim 16, **characterized in that** said converter section (102) converts the MPEG-4-based core profile code stream into an MPEG-4-based simple profile code stream.

18. The contents processing apparatus according to claim 15, **characterized in that** said converter section (102) decodes the first code stream and produces the second code stream by encoding the contents obtained from this decoding with a coding method different from that employed in the first code stream.

19. The contents processing apparatus according to claim 18, **characterized in that** said first code stream includes an MPEG-4-based core profile code stream, and said converter section (102) converts the MPEG-4-based core profile code stream into an MPEG-4-based simple profile code stream.

20. A contents transmission system for transmitting a code stream obtained by compression-encoding contents, characterized by comprising:
a first transmission channel;
a second transmission channel;
a first terminal (A) which receives a first code stream through said first transmission channel;
a second terminal (B) which receives a second code stream through said first transmission channel;
an exchanger device which exchanges the first and second code streams received by said first and second terminals through said second transmission channel;
a reconstruction device (302) which decodes the code stream received through said first transmission channel and the code stream received through said second transmission channel and combines the decoded streams to reconstruct the contents.

21. A contents converting method characterized by comprising:
converting a first code stream produced by compression-encoding contents into a second code stream having a data size smaller than that of the first code stream.

22. The method according to claim 21, **characterized in that** said converting step includes dividing the first code stream into a plurality of code streams to produce the second code stream.

23. A computer program product for a contents transmission system characterized by comprising:
means for instructing a computer to convert a first code stream produced by compression-encoding contents into a second code stream having a data size smaller than that of the first code stream; and
means for instructing the computer to decode the second code stream for reconstructing the contents.
